Europäisches Patentamt

European Patent Office

Office européen des brevets

(19)

(11) Publication number: **0 443 981 A1**

## (12) EUROPEAN PATENT APPLICATION

(21) Application number: **91810033.0**

(22) Date of filing: **16.01.91**

(51) Int. Cl.⁵: **C01G 31/00, C09C 1/02, C09C 1/04**

(30) Priority: **25.01.90 US 470510**

(43) Date of publication of application: **28.08.91 Bulletin 91/35**

(84) Designated Contracting States: **BE DE ES FR GB IT NL**

(71) Applicant: **CIBA-GEIGY AG**
**Klybeckstrasse 141**
**CH-4002 Basel (CH)**

(72) Inventor: **Sullivan, Robert M.**
**52 South Wade Ave.**
**Washington, PA 15301 (US)**

(54) **Bismuth vanadate modified pigments in monoclinic crystalline form.**

(57) Bismuth vanadates containing bismuth replacement ions, said materials being in the monoclinic crystal phase and being obtained by calcination of the precursor materials at specified relative concentrations to produce bright yellow pigments.

EP 0 443 981 A1

Jouve, 18, rue Saint-Denis, 75001 PARIS

# BISMUTH VANADATE MODIFIED PIGMENTS IN MONOCLINIC CRYSTALLINE FORM

Bismuth vanadates and substituted bismuth vanadates have been identified as pigmentary, yellow compounds applicable for coloring plastics and paints (see US 4,115,141 and 4,115,142). These materials are identified as being in the monoclinic crystalline form (β-fergusonite) and are prepared by a multi-step precipitation procedure.

US 4,316,746 describes bismuth vanadate/molybdate and bismuth vanadate/tungstenate pigments which consist in the case of bismuth vanadate/molybdate of a crystalline phase having a scheelitelike structure, while in the case of bismuth vanadate/tungstenate a two-phase product is present.

A bismuth vanadate/molybdate or bismuth vanadate/tungstenate was also proposed in US 4,455,174 and DE 3,221,338 as a further alternative yellow pigment. These are multiphase products which consist of a bismuth vanadate phase and a bismuth/molybdate and/or a bismuth/tungstenate phase and which are prepared by a liquid process.

US 4,251,283 discloses bismuth vanadate-based pigments obtained by the calcination of a mixture of $BiPO_4$, $V_2O_5$ and an alkaline earth or zinc oxide wherein the molar ratio of $Bi_2O_3 : P_2O_5$ is equal to 1. The molar ratio of $Bi_2O_3 : V_2O_5$ is determined relative to the specified metal oxide. Monoclinic bismuth vanadate is identified in these pigments.

Finally, US 4,752,460 discloses a series of inorganic compounds based on bismuth vanadate. These materials with bismuth and vanadium replacement ions are noted to be in the tetragonal, scheelitelike crystal structure. The latter compounds are preferably prepared by a precipitation approach.

It is an object of the invention to develop a series of substituted bismuth vanadate pigments in monoclinic crystalline form.

It has now been determined that a series of bismuth vanadate pigments can be prepared in monoclinic form while retaining the excellent pigmentary properties of, for example, the tetragonal bismuth vanadate materials prepared in US 4,752,460. These materials exhibit a single phase, monoclinic crystalline symmetry as determined using X-ray diffraction techniques and are prepared by a straightforward calcination process. The fully treated products exhibit excellent pigmentary properties, including high tinctorial strength, good heat stability and good resistance to chemical attack.

The monoclinic compounds of the invention correspond to the formula

$$(Bi,A)VO_4$$

wherein A is an alkaline earth metal, zinc or mixtures thereof; the molar ratio of A : Bi being between 0.05 : 1 and 0.66 : 1, preferably 0.1 : 1 to 0.4 : 1. The preferred alkaline earth metals are calcium and barium. The (Bi,A) notation is to be understood as meaning that bismuth is partly replaced by one or more A cations.

An alternative way of defining the instant bismuth vanadates is by the formula $Bi_{1-x}A_xV_{1+x}O_{4+2x}$, x being a number between 0.047 and 0.4, preferably between 0.09 and 0.29.

The compounds are in the monoclinic crystal phase as determined using X-ray diffraction techniques with conventional X-ray diffraction instrumentation known to those skilled in the art.

The pigments of the invention may be prepared according to the following calcining process which involves a solid state reaction at elevated temperatures starting from the corresponding metal oxides. As noted, the method is to calcine mixtures of oxides, or any salt which yields the corresponding oxide, e.g., carbonates, nitrates, oxylates, hydroxides, etc., by thermal decomposition in the proper ratios for the desired composition. Calcining temperatures vary from about 500 to about 950°C. The optimum temperature depends upon the particular composition being prepared. Higher temperatures are preferred in order to facilitate reaction and to assure a homogeneous product. A critical upper limit for calcining temperatures is imposed by the formation of a liquid phase.

At the end of the calcining, the products are allowed to slowly cool down. For instance, they are brought down to temperatures of between 200°C and room temperature in a time period of between 3 and 24 hours. Thereafter, they are discharged from the furnace, cooled down, if necessary, to room temperature and finally wet-ground, preferably in an alkaline environment, for example as described in US 4,937,063. The wet-grinding may be carried out, for instance, in ball, microsphere or sand mills. In general, the calcined product undergoes a dry crushing before the wet-grinding. At the end of the grinding, the product is filtered, washed and dried, for instance, at 100°-130°C, and finally dry ground for instance, in a hammer mill.

The resulting bismuth vanadate compounds exhibit quality pigmentary properties, particularly the desired bright yellow color and high tinting capability. They are highly suited for pigmenting a wide variety of high molecular weight organic materials, including resins, oil and organic polymers. They can be incorporated into lacquers, paints and printing inks.

To further improve the pigmentary properties, for example, the stability to heat, light and chemical attack, it is advantageous to coat the pigments with an inorganic protective coating. Such processes are disclosed in US 3,370,971, US 3,639,133 and US 4,046,588. For this purpose, inorganic substances, for example aluminum, titanium, antimony, cerium, zirconium or silicon compounds or zinc phosphate or mixtures thereof are precipitated onto the compounds. $SiO_2$ and $AlPO_4$ coatings are particularly preferred. This precipitation can be carried out in one or more stages. The amount of coating agent is expediently 2-40%, preferably 2-20%, and in particular 3-10%, based on the total weight of the compound.

To improve certain pigment properties, the prepared compounds can additionally be treated with texture-improving agents, for example with long-chain aliphatic alcohols, esters, acids or salts thereof, amines, amides, waxes or resinous substances, such as abietic acid, hydrogenation products, esters or salts thereof, further with nonionic, anionic or cationic surface-active agents.

The following examples further illustrate the embodiments of the invention. In these examples, all parts given are by weight unless otherwise indicated.

Example 1 : A calcining vessel is charged with 1864 parts of $Bi_2O_3$, 818.55 parts of $V_2O_5$ and 100 parts of $CaCO_3$ which are thoroughly mixed and homogenized. The mixture is heated to a temperature of approximately 760°C and held at that temperature for approximately four hours. After cooling, the material is pebble milled in an alkaline environment to reduce the particle size, washed to remove any solubles, and dried. A bright yellow pigment having a molar ratio of Ca :Bi equal to 0.125 :1 and exhibiting the X-ray diffraction pattern of monoclinic bismuth vanadate is obtained.

Example 2 : The procedure of Example 1 is repeated with the exception that 1864 parts of $Bi_2O_3$, 1092 parts of $V_2O_5$ and 394.7 parts of $BaCO_3$ are treated in the indicated manner. A bright yellow pigment having a molar ratio of Ba :Bi equal to 0.25 :1 and exhibiting the X-ray diffraction pattern characteristic of monoclinic bismuth vanadate is obtained.

Example 3 : The procedure of Example 1 is repeated with the exception that 65.9 parts of $Bi_2O_3$, 32.12 parts of $V_2O_5$ and 1.97 parts of CaO are treated in the indicated manner. A bright yellow pigment having a molar ratio of Ca :Bi equal to 0.053 :1 and exhibiting the X-ray diffraction pattern of monoclinic bismuth vanadate is obtained.

Summarizing, it is seen that this invention provides a series of pigmentary bismuth vanadate compounds in monoclinic crystal form. Variations may be made in procedures, proportions and materials without departing from the scope of the invention as defined by the following claims.

**Claims**

1. A compound of the formula
   $$(Bi,A)VO_4$$
   wherein A is an alkaline earth metal, zinc or a mixture thereof ; the molar ratio of A :Bi being between 0.05 :1 and 0.66 :1 ; said compound being in monoclinic crystal form.

2. The compound of claim 1, wherein A is calcium or barium.

3. The compound of claim 1, wherein the molar ratio of A :Bi is between 0.1 :1 and 0.4 :1.

4. The compound of claim 1 which is coated with an inorganic protective coating.

5. A process for preparing the monoclinic compound of claim 1, which process comprises blending the precursor materials which are in either oxide or salt form, calcining the blend at a temperature of 500-950°C, and then cooling and grinding the calcined product.

6. A colored organic material comprising the organic material and an effective coloring amount of the compound of claim 1.

7. A colored organic material comprising the organic material and an effective coloring amount of the compound of claim 4.

8. Use of a compound of claim 1 for coloring organic materials.

9. Use of a compound of claim 4 for coloring organic materials.

**Claims for the following Contracting State : ES**

1. A process for preparing a monoclinic compound of the formula
   $$(Bi,A)VO_4$$
   wherein A is an alkaline earth metal, zinc or a mixture thereof ; the molar ratio of A :Bi being between 0.05 :1 and 0.66 :1 ; which process comprises blending the precursor materials which are in either oxide or salt form, calcining the blend at a temperature of 500-950°C, and then cooling and grinding the calcined product.

2. The process of claim 1, wherein A is calcium or barium.

3. The process of claim 1, wherein the molar ratio of A :Bi is between 0.1 :1 and 0.4 :1.

4. The process of claim 1 which is coated with an inorganic protective coating.

5. Use of a compound of claim 1 for coloring organic materials.

6. Use of a compound of claim 4 for coloring organic materials.

European Patent
Office

**EUROPEAN SEARCH REPORT**

Application Number

EP 91 81 0033

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 304 399 (CIBA-GEIGY)<br>* Page 3, lines 2-33 * & US-A-4 937 063 (Cat. D)<br>--- | 1-3,5 | C 01 G  31/00<br>C 09 C   1/02<br>C 09 C   1/04 |
| Y | DE-A-3 315 850 (BAYER)<br>* Pages 1,2; claims 1,5,6; page 9, lines 21-26 *<br>--- | 1-3,5 | |
| A | EP-A-0 239 526 (CIBA-GEIGY)<br>* Columns 11,12, claim 1; column 13, claims 11-13 * & US-A-4 752 460 (Cat. D)<br>--- | 1-3,6-9 | |
| A | PATENT ABSTRACTS OF JAPAN, vol. 12, no. 165 (C-496), 18th May 1988; & JP-A-62 277 485 (SHARP CORP.) 02-12-1987<br>----- | 5 | |
| | | | **TECHNICAL FIELDS SEARCHED (Int. Cl.5)**<br><br>C 01 G<br>C 09 C |

The present search report has been drawn up for all claims

| Place of search | Date of completion of the search | Examiner |
|---|---|---|
| THE HAGUE | 16-04-1991 | LIBBERECHT-VERBEECK E.M. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)